# EUROPEAN PATENT SPECIFICATION

(11) **EP 2 540 587 B1**
(45) Date of publication and mention of the grant of the patent: **01.01.2014**
(21) Application number: 12171787.0
(22) Date of filing: 13.06.2012
(51) Int. Cl.: B60T 8/26, B62L 3/08

(54) **Motorcycle**
Motorrad
Motocyclette

(30) Priority: 01.07.2011 JP 2011147437
(43) Date of publication of application: 02.01.2013
(73) Proprietor: Honda Motor Co., Ltd., Tokyo 107-8556 (JP)
(72) Inventor: Kuwano, Hideki, Saitama, 351-0193 (JP); Uchida, Odai, Saitama, 351-0193 (JP)
(74) Representative: Herzog, Markus

(56) References cited:
- EP-A1- 1 842 755
- EP-A1- 1 886 839
- EP-A1- 2 213 536
- EP-A1- 2 216 218
- EP-A1- 2 284 071
- EP-A2- 1 531 101
- US-A1- 2008 079 310

## Description

### Technical Field

The present invention relates to a motorcycle having an ABS modulator.

### Background Art

A motorcycle according to the preamble of claim 1 is known from EP 2 216 218 A1.

A motorcycle is known which is equipped with an ABS (antilock braking system) modulator configured to control braking force of the brakes (for example, see Japanese Patent Document No. JP-A-2011-37355 (Fig. 1 and Fig. 2).

As shown in Fig. 1 of Japanese Patent Document No. JP-A-2011-37355, a vehicle body frame (11) (the reference numeral in parentheses indicates the reference numeral in Patent Document 1, and the same applies hereinafter) of a motorcycle (10) is provided with an ABS modulator (42) and a delay valve (108) which are arranged substantially in the center in a longitudinal direction of the vehicle.

In Fig. 2 of Japanese Patent Document No. JP-A-2011-37355, once a brake lever (81) provided on a handlebar is manipulated, manipulation information thereof is inputted into the ABS modulator (42) via a hydraulic pipe (86), and the ABS modulator (42) controls a front-wheel disk brake (101) and a rear-wheel disk brake (43) via hydraulic pipes (91 and 103). Similarly, once a brake pedal (57) near a step is manipulated, manipulation information thereof is inputted into the ABS modulator (42) via a hydraulic pipe (87), and the ABS modulator (42) controls the front-wheel disk brake (101) via the delay valve (108) and a hydraulic pipe (107), and the rear-wheel disk brake (43) via the hydraulic pipe (103).

When the ABS modulator (42) and the delay valve (108) are arranged substantially in the center in the longitudinal direction of the vehicle, the hydraulic pipe (86) and the hydraulic pipe (87) have almost the same length, and thus the total length of the hydraulic pipes (86, 87, 91, and 103) for the brakes can be minimized.

Meanwhile, a scooter-type vehicle has two brake controllers which are both provided on a handlebar.

When a technique in Japanese Patent Document No. JP-A-2011-37355 is applied to the scooter-type vehicle, the hydraulic pipe (87) extending from a brake controller to the ABS modulator (42) becomes longer. As the result, the total length of the hydraulic pipes (86, 87, 91, and 103) for the brakes becomes longer.

The longer total length of hydraulic pipes requires a larger space for housing hydraulic pipes, and thus leads to a larger size of a vehicle.

However, in a case where compactness and light weight are required for the vehicle, the larger size of the vehicle needs to be avoided.

Hence, for a vehicle, like a scooter-type vehicle, having left and right brake controllers provided on a handlebar, there has been a demand for a technique making it possible to arrange an ABS modulator and a delay valve compactly and to shorten hydraulic pipes.

### Summary of the Invention

### Problems to be Solved by the Invention

An object of the present invention is to provide a technique making it possible to shorten hydraulic pipes in a vehicle which includes left and right brake controllers on a handlebar and includes an ABS modulator.

### Means for Solving the Problems

An invention of claim 1 is a motorcycle including: a head pipe provided in a front portion of a vehicle body frame; a steering system pivotally supported by the head pipe, and including a front wheel in a lower portion of the steering system; a handlebar provided on an upper portion of the steering system, and configured to steer the front wheel; a front cover provided below the handlebar, and covering the head pipe; a hydraulic front-wheel brake provided to the steering system, and configured to brake the front wheel; a hydraulic rear-wheel brake provided to a vehicle body, and configured to brake a rear wheel; a first controller configured to generate a hydraulic pressure for operating the front-wheel brake; a second controller configured to generate a hydraulic pressure for operating the front-wheel brake and the rear-wheel brake; an ABS modulator configured to control breaking force for the front wheel in operating the front-wheel brake; and a delay valve configured to divide the hydraulic pressure generated by the manipulation of the second controller between the front-wheel brake and the rear-wheel brake, and configured to delay the timing of feeding the hydraulic pressure to the front-wheel brake in comparison with the timing of feeding the hydraulic pressure to the rear-wheel brake. The motorcycle is characterized in that: the first controller and the second controller are provided on the handlebar; the ABS modulator is arranged inside the front cover and in front of the head pipe; and the delay valve is arranged inside the front cover and by the side of the ABS modulator.

An invention of claim 2 is characterized in that: the delay valve is fixed to the head pipe; a flexible first hydraulic hose extended from the second controller to the delay valve, and a flexible second hydraulic hose extended from the front-wheel brake to the delay valve are fastened to the delay valve by using banjo bolts directed in a vehicle-width direction; and the first hydraulic hose and the second hydraulic hose are routed from the banjo bolts in a direction of approaching the head pipe in a side view of the vehicle.

An invention of claim 3 is characterized in that: the ABS modulator is attached to the head pipe; and a flexible third hydraulic hose extended from the first controller to the ABS modulator, and a flexible fourth hydraulic hose extended from the front-wheel brake to the ABS modulator are attached to the head pipe behind the delay valve, and then are connected to the ABS modulator, respectively, via hydraulic pipes which are different bodies.

An invention of claim 4 is characterized in that: the hydraulic pipes which are the different bodies detour around front, outer side, and rear portions of the delay valve from the ABS modulator, and are connected to the third hydraulic hose and the fourth hydraulic hose, respectively.

An invention of claim 5 is characterized in that the ABS modulator, the delay valve, the third hydraulic hose and the fourth hydraulic hose are attached to the head pipe by use of a bracket attached to a front portion of the head pipe.

An invention of claim 6 is characterized in that: the delay valve is arranged offset to one side in the vehicle-width direction in a front view of the vehicle; the ABS modulator is arranged offset to the other side in the vehicle-width direction; and the first hydraulic hose and the second hydraulic hose are fastened to an inner portion of the delay valve in the vehicle-width direction.

### Effects of the Invention

According to the invention of claim 1, in the motorcycle including the first controller and the second controller for the brakes provided on the handlebar, the ABS modulator and the delay valve are arranged in front of the head pipe.

The ABS modulator and the delay valve are arranged between the first controller and the second controller.

The hydraulic pipe extending from the first controller to the ABS modulator or the delay valve, and the hydraulic pipe extending from the second controller to the ABS modulator or the delay valve can be made shortest.

Consequently, the total length of the hydraulic pipes can be shortened.

Since the hydraulic pipes in particular around the head pipe are shortened, the front cover collectively surrounding the hydraulic pipes, the ABS modulator, and the delay valve can be made small.

According to the invention of claim 2, the delay valve is fixed to the head pipe.

The delay valve is attached to the head pipe which is not steered. Since the weight of the delay valve is not applied to the steering system, the weight of the steering system does not become heavy, so that steering can be performed lightly.

In addition, the first hydraulic hose and the second hydraulic hose are fastened to the delay valve by using the banjo bolts directed in the vehicle-width direction, and are routed from the banjo bolts in the direction of approaching the head pipe in the side view of the vehicle.

Since the first hydraulic hose and the second hydraulic hose can be located closer to the head pipe, the movement of the first hydraulic hose during the steering can be minimized, the first hydraulic hose can be made as shortest as possible, and thus the motorcycle can be made smaller. Further, since the banjo bolts are tightened while directed in the vehicle-width direction, the first hydraulic hose and the second hydraulic hose extending in a direction perpendicular to the axes of the banjo bolts can be easily directed toward the head pipe, the delay valve can be arranged without difficulties, and thus the degree of freedom of the arrangement can be enhanced.

According to the invention of claim 3, the ABS modulator is attached to the head pipe.

The ABS modulator is attached to the head pipe which is not steered. Since the weight of the ABS modulator is not applied to the steering system, the weight of the steering system does not become heavy, so that the steering can be performed lightly.

In addition, the third hydraulic hose and the fourth hydraulic hose are attached to the head pipe behind the delay valve, and then are connected to the ABS modulator, respectively, via the hydraulic pipes which are different bodies.

Since the third hydraulic hose and the fourth hydraulic hose can be located closer to the head pipe, the movement of the third hydraulic hose during the steering can be minimized, the third hydraulic hose can be made as shortest as possible, and thus the motorcycle can be made smaller. Further, since the delay valve is arranged in front of the third hydraulic hose and the fourth hydraulic hose, the first hydraulic hose and the third hydraulic hose which move in conjunction with the steering of the steering system can be arranged close to each other, and the second hydraulic hose and the fourth hydraulic hose can be arranged close to each other. For this reason, the movement space can be minimized by collectively routing the hydraulic hoses, and the front cover can be shortened.

According to the invention of claim 4, the hydraulic pipes which are the different bodies detour around the front, outer side, and rear portions of the delay valve from the ABS modulator, and are connected to the third hydraulic hose and the fourth hydraulic hose, respectively.

Since the hydraulic pipes which are the different bodies are routed while detouring around the outer side of the delay valve in the vehicle-width direction, a space near the center in the vehicle-width direction can be made large; the delay valve, the third hydraulic hose and the fourth hydraulic hose can be located close to the head pipe; and the front portion of the motorcycle can be made smaller.

According to the invention of claim 5, the ABS modulator, the delay valve, the third hydraulic hose and the fourth hydraulic hose are attached to the head pipe by use of the bracket attached to the front portion of the head pipe.

The ABS modulator, the delay valve, the third hydraulic hose and the fourth hydraulic hose sub-assembled with the bracket can be attached to the vehicle body, and thus man-hours for attaching steps can be reduced.

According to the invention of claim 6, the delay valve is arranged offset to one side in the vehicle-width direction in the front view of the vehicle; the ABS modulator is arranged offset to the other side in the vehicle-width direction; and the first hydraulic hose and the second hydraulic hose are fastened to an inner side of the delay valve in the vehicle-width direction.

Since the first hydraulic hose and the second hydraulic hose can be attached at positions close to the center in the vehicle-width direction, the first hydraulic hose and the second hydraulic hose can be located close to the head pipe. Thus, the movement of the hydraulic hose during the steering can be reduced more, and the ABS modulator and the delay valve can be arranged with good balance between the right and left.

### Brief Description of the Drawings

- Fig.1: is a left side view of a motorcycle of the present invention.
- Fig.2: is circuit diagram of a brake system of the motorcycle of the present invention.
- Fig.3: is a working diagram of the brake system.
- Fig. 4: is a perspective view of a chief part of the motorcycle of the present invention.
- Fig. 5: is a plan view of the chief part of the motorcycle of the present invention.
- Fig. 6: is a view for explaining a delay valve.
- Fig. 7: is a side view of the chief part of the motorcycle of the present invention.
- Fig. 8: is a cross-sectional view of the chief part of the motorcycle taken along the line 8 in Fig. 7.
- Fig. 9: is a view of the chief part of the motorcycle seen as indicated by the arrow 9 in Fig. 8.
- Fig. 10: is a diagram for explaining hydraulic hoses.

### Mode for Carrying Out the Invention

An embodiment of the present invention will be described below based on the attached drawings. Note that: the drawings should be viewed in the direction of orientation of reference numerals; and an arrow (FRONT) in the drawings indicates the direction toward the front of the vehicle.

### Embodiment

The embodiment of the present invention will be described below based on the drawings.

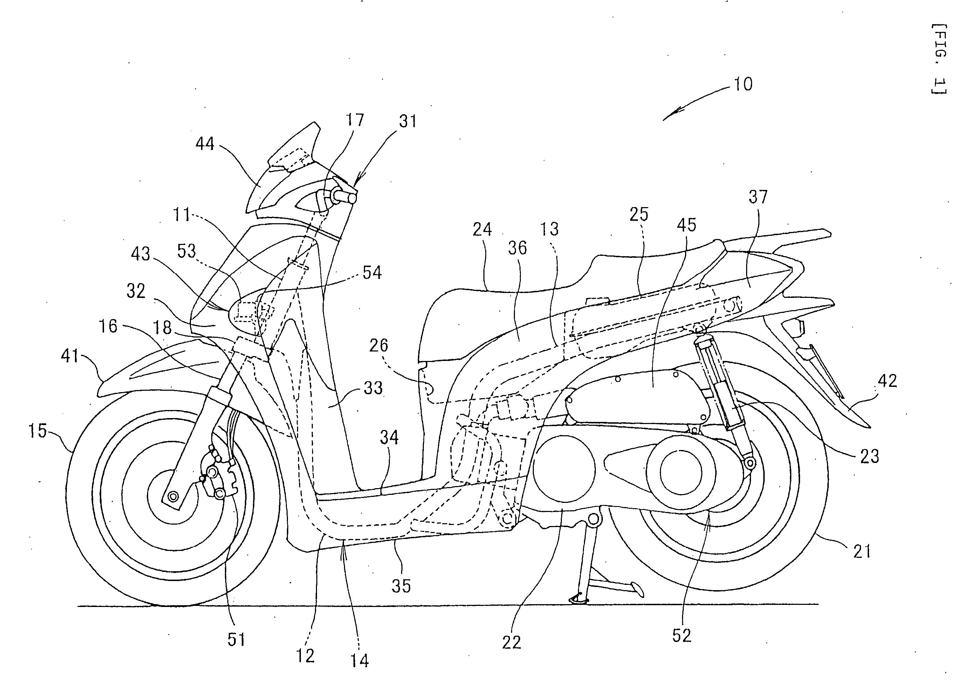

As shown in Fig. 1, a motorcycle 10 is a scooter-type one, and includes a main frame 12 and a seat rail 13. The main frame 12 extends downward from a head pipe 11, and has a U-shape in the side view. The seat rail 13 extends from a rear portion of the main frame 12 to the rear of a vehicle. A vehicle body frame 14 is constituted of the main frame 12 and the seat rail 13.

The motorcycle 10 includes a bottom bridge 18, front forks 16 as a steering system, a handlebar 17, a power unit 22, rear cushions 23, and a seat 24.

The bottom bridge 18 is pivotally supported by the head pipe 11. The front forks 16 are provided to the bottom bridge 18, and include a front wheel 15 in lower portions thereof. The handlebar 17 is provided on the upper portions of the front forks 16, and is configured to steer the front wheel 15. The power unit 22 is provided to a rear portion of the main frame 12 in a way that is swingable up and down, and includes a rear wheel 21 in a rear portion of the power unit 22. The rear cushions 23 are provided between the power unit 22 and the seat rail 13, and absorb impact from the ground. The seat 24 is provided on an upper portion of the seat rail 13, and a rider is seated thereon. A fuel tank 25 and a trunk 26 are provided below the seat 24.

The handlebar 17 is covered with a handlebar cover 31 which rotates integrally with the handlebar 17. A vehicle-front side of the head pipe 11 is covered with a front cover 32. An upper side of the main frame 12 is covered with a leg shield 33. A lower portion of the main frame 12 is covered with a step floor 34 and an under cover 35. The seat rail 13 is covered with a side cover 36 and a rear cover 37.

A front fender 41 is provided above the front wheel 15. A rear fender 42 is provided above the rear wheel 21. Turn indicator lights 43 are provided on the front cover 32. A headlamp 44 is provided on a front portion of the handlebar cover 31. An air cleaner 45 is provided above the power unit 22.

In addition, the motorcycle 10 includes a hydraulic front-wheel brake 51, a rear-wheel brake 52, an ABS modulator 53, and a delay valve 54. The front-wheel brake 51 is provided on the front forks 16, and brakes the front wheel 15. The rear-wheel brake 52 is provided behind the power unit 22, and brakes the rear wheel 21. The ABS modulator 53 is arranged inside the front cover 32 and in front of the head pipe 11, and controls braking force of the front wheel 15 in operating the front-wheel brake 51. The delay valve 54 is arranged inside the front cover 32 and in front of the head pipe 11. The delay valve 54 divides a hydraulic pressure between the front-wheel brake 51 and the rear-wheel brake 52, and delays the timing of feeding the hydraulic pressure to the front-wheel brake 51 in comparison with the timing of feeding the hydraulic pressure to the rear-wheel brake 52. The ABS modulator 53 and the delay valve 54 are arranged by utilizing a space between the left and right turn indicator lights 43.

Next, a description is given of a circuit of a brake system.

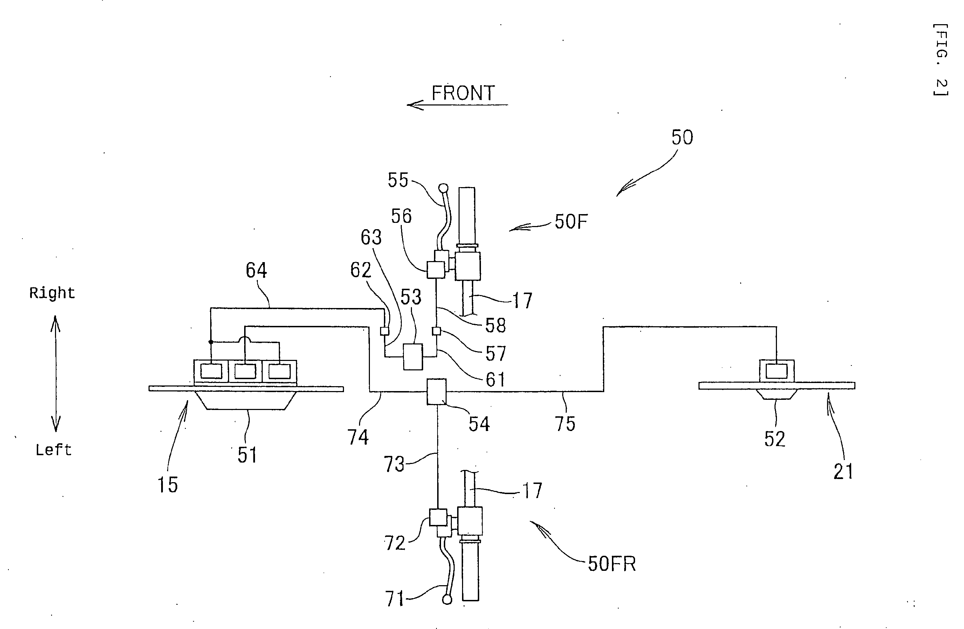

As shown in Fig. 2, a brake system 50 includes a front-wheel brake system 50F configured to brake only the front wheel 15 and a both-wheel brake system 50FR configured to brake both of the front wheel 15 and the rear wheel 21.

The front-wheel brake system 50F includes a first controller 55, a first master cylinder 56, a third hydraulic hose 58, a first hydraulic pipe 61, a second hydraulic pipe 63, and a fourth hydraulic hose 64. The first controller 55 is provided on a right portion of the handlebar 17, and is configured to operate the front-wheel brake 51. The first master cylinder 56 is provided to the first controller 55, and generates a hydraulic pressure. The third hydraulic hose 58 is extended from the first master cylinder 56 to a first connection portion 57. The first hydraulic pipe 61 is extended from the first connection portion 57 to the ABS modulator 53. The second hydraulic pipe 63 is extended from the ABS modulator 53 to a second connection portion 62. The fourth hydraulic hose 64 is extended from the second hydraulic pipe 63 to the front-wheel brake 51.

The both-wheel brake system 50FR includes a second controller 71, a second master cylinder 72, a first hydraulic hose 73, a second hydraulic hose 74, and a rear hydraulic pipe 75. The second controller 71 is provided on a left portion of the handlebar 17, and is configured to operate the front-wheel brake 51 and the rear-wheel brake 52. The second master cylinder 72 is provided on the second controller 71, and generates a hydraulic pressure. The first hydraulic hose 73 is extended from the second master cylinder 72 to the delay valve 54. The second hydraulic hose 74 is extended from the delay valve 54 to the front-wheel brake 51. The rear hydraulic pipe 75 is extended from the delay valve 54 to the rear-wheel brake 52.

Next, a description is given of how the brake system works.

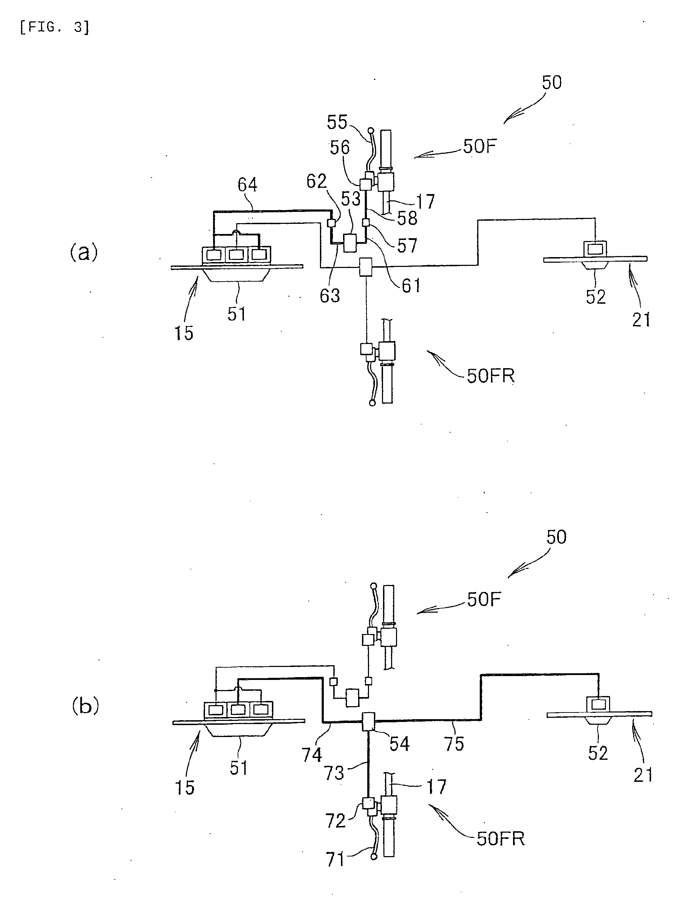

Part (a) of Fig. 3 is a diagram showing how the front-wheel brake system 50F works. Once the first controller 55 is manipulated, the hydraulic pressure generated by the first master cylinder 56 is fed to the ABS modulator 53 through the third hydraulic hose 58, the first connection portion 57, and the first hydraulic pipe 61. The hydraulic pressure fed to the ABS modulator 53 is further fed to the front-wheel brake 51 through the second hydraulic pipe 63, the second connection portion 62, and the fourth hydraulic hose 64.

Part (b) of Fig. 3 is a diagram showing how the both-wheel brake system 50FR works. When the second controller 71 is manipulated, the hydraulic pressure generated by the second master cylinder 72 is fed to the delay valve 54 through the first hydraulic hose 73. Part of the hydraulic pressure fed to the delay valve 54 is firstly fed to the rear-wheel brake 52 through the rear hydraulic pipe 75. The rest of the hydraulic pressure fed to the delay valve 54 is fed to the front-wheel brake 51 through the second hydraulic hose 74 at timing slightly later than that of the part of the hydraulic pressure fed to the rear-wheel brake 52.

Next, a description is given of locations of the ABS modulator 53 and the delay valve 54.

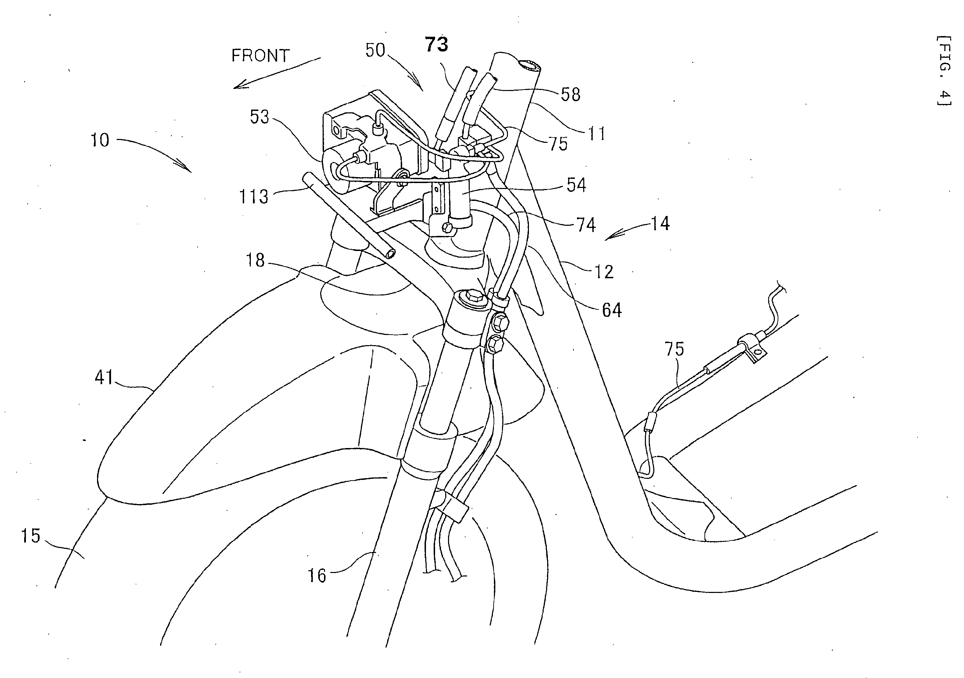

As shown in Fig. 4, the ABS modulator 53 is arranged near the head pipe 11 and on the vehicle-front side of the head pipe 11. The delay valve 54 is arranged near the head pipe 11 and by the side of the ABS modulator 53. The first hydraulic hose 73 and the third hydraulic hose 58 are routed near the head pipe 11. The second hydraulic hose 74 and the fourth hydraulic hose 64 are extended from the vicinity of the head pipe 11, and are routed along the front fork 16. The rear hydraulic pipe 75 is extended from the delay valve 54 to the main frame 12, and is routed around the head pipe 11.

Next, the routing of the first hydraulic hose 73 and the third hydraulic hose 58 will be described based on the plan view.

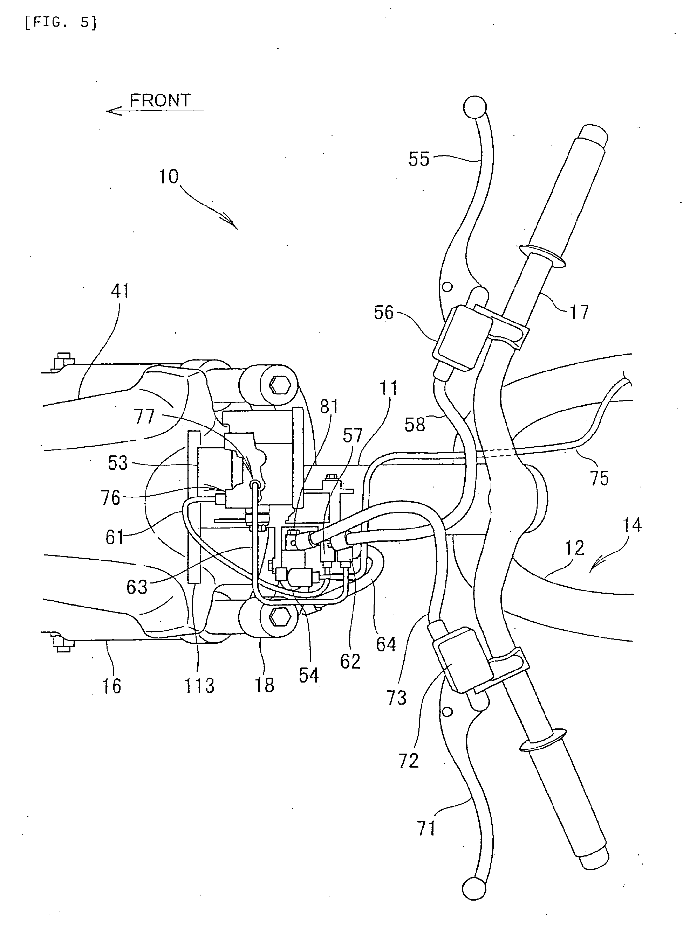

As shown in Fig. 5, the first controller 55 is provided to the right portion of the handlebar 17 in the vehicle-width direction, and the first master cylinder 56 is provided to the first controller 55. The third hydraulic hose 58 is extended along the handlebar 17 from the first master cylinder 56 to the center side in the vehicle-width direction, further is routed along the head pipe 11, and then is connected to the first connection portion 57. The first hydraulic pipe 61 is extended from the first connection portion 57 outward in the vehicle-width direction, detours around the rear, the outer side and the front of the delay valve 54, and is connected to a hydraulic-pressure inlet portion 76 of the ABS modulator 53. The second hydraulic pipe 63 is extended from a hydraulic-pressure outlet portion 77 of the ABS modulator 53, detours around the front, the outer side and the rear of the delay valve 54, and is connected to the second connection portion 62.

In addition, the second controller 71 is provided to the left portion of the handlebar 17 in the vehicle-width direction, and the second master cylinder 72 is provided to the second controller 71. The first hydraulic hose 73 is extended along the handlebar 17 from the second master cylinder 72 to the center side in the vehicle-width direction, further is routed along the head pipe 11, and then is connected to the delay valve 54 by using a banjo bolt 81 directed in the vehicle-width direction.

Next, a description is given of the delay valve 54.

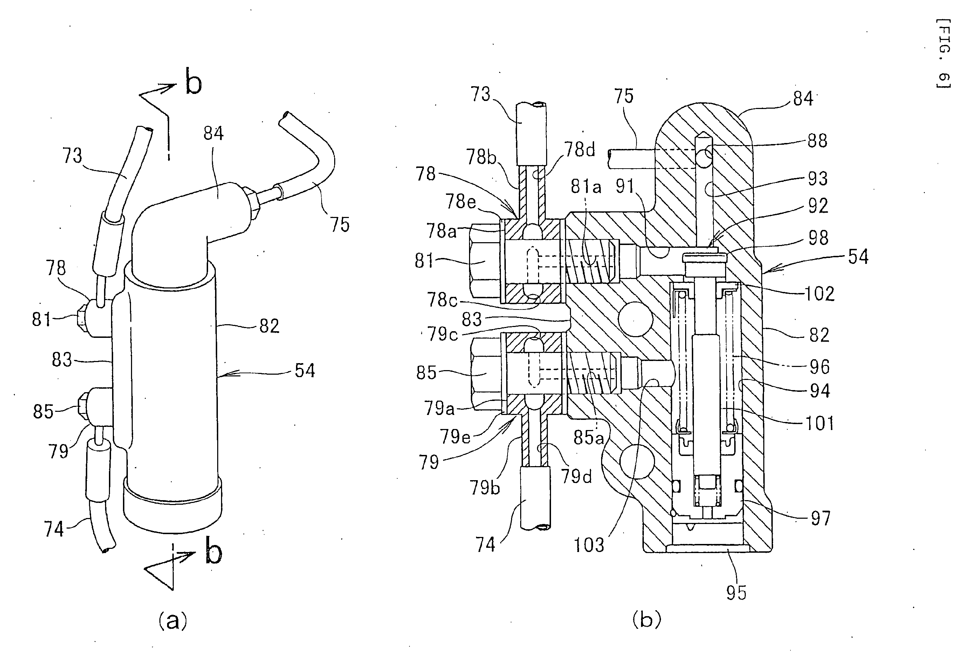

As shown in Part (a) of Fig. 6, the delay valve 54 includes a main body portion 82, a seat portion 83, and a swelling-out portion 84. The seat portion 83 is provided to the main body portion 82, and receives the first hydraulic hose 73 and the second hydraulic hose 74. The rear hydraulic pipe 75 is connected to the swelling-out portion 84. Banjo-shaped joints 78, 79 are attached to the seat portion 83 by using the banjo bolts 81, 85, respectively. The first hydraulic hose 73 is connected to the banjo-shaped joint 78 by using the banjo bolt 81, and the second hydraulic hose 74 is connected to the banjo-shaped joint 79 by using the banjo bolt 85. Incidentally, the banjo bolts 81, 85 are arranged while being directed in the vehicle-width direction.

Part (b) of Fig. 6 is a cross-sectional view of the delay valve 54 taken along the b-b line in Part (a) of Fig. 6. The delay valve 54 includes an input port 86, an output port for front wheel 87, and an output port for rear wheel 88. The input port 86 is provided in an upper portion of the seat portion 83, and the banjo bolt 81 is connected thereto. The output port for front wheel 87 is provided in a lower portion of the seat portion 83, and the banjo bolt 85 is connected thereto. The output port for rear wheel 88 is provided in the swelling-out portion 84, and the rear hydraulic pipe 75 is connected thereto.

The banjo bolt 81 is provided with an internal passage 81 a therein. The banjo-shaped joint 78 is constituted of a cylindrical portion 78a and a protruding portion 78b. The banjo-shaped joint 78 includes an annular passage 78c along an inner surface of the cylindrical portion 78a. An external passage 78d communicating with the outside is connected to the annular passage 78c. A seal washer 78e is provided between the head of the banjo bolt 81 and the banjo-shaped joint 78, and another seal washer 78e is provided between the banjo-shaped joint 78 and the seat portion 83. Similarly, the banjo bolt 85 is provided with an internal passage 85a therein. In addition, the banjo-shaped joint 79 includes a cylindrical portion 79a, a protruding portion 79b, an annular passage 79c, and an external passage 79d. A seal washer 79e is provided between the head of the banjo bolt 85 and the banjo-shaped joint 79, and another seal washer 79e is provided between the banjo-shaped joint 79 and the seat portion 83.

An input passage 91 is extended from the input port 86 toward the inside of the main body portion 82. An upper output passage 93 is extended upward from a branching portion 92 of the input passage 91 up to the output port for rear wheel 88. A cylinder portion 94 is provided under the branching portion 92.

A plug 95 is provided to a lower end of the cylinder portion 94. A receiving portion 97 receiving a lower end of a spring 96 is provided above the plug 95. A shaft 101 of a piston 98 is slidably provided to the receiving portion 97. An upper end of the spring 96 is supported by a sliding receiving member 102 slidably provided to the cylinder portion 94. A lower output passage 103 extending to the output port for front wheel 87 is provided to a middle portion of the cylinder portion 94. The spring 96 biases the piston 98 upward with the sliding receiving member 102 placed in between.

Next, a description is given of how the delay valve 54 works.

Oil from the input port 86 is fed to the branching portion 92, and part thereof is discharged to the outside from the upper output passage 93. When the hydraulic pressure increases in the branching portion 92, the piston 98 is pushed down. Then, the rest of the oil fed to the branching portion 92 is discharged to the outside from the lower output passage 103 through the cylinder portion 94.

Next, the routing of the second hydraulic hose 74 and the fourth hydraulic hose 64 will be described based on the side view.

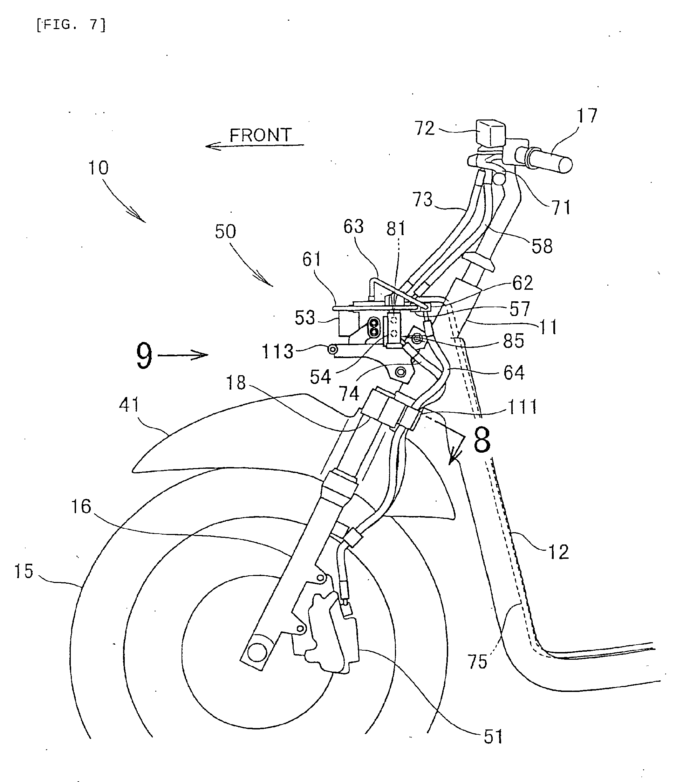

As shown in Fig. 7, the second hydraulic hose 74 is extended from the delay valve 54, and is routed along the front fork 16. The fourth hydraulic hose 64 is extended from the second connection portion 62, and is routed along the front fork 16. The second hydraulic hose 74 and the fourth hydraulic hose 64 are fixed by using a hose clip 111 provided to the bottom bridge 18 (which will be described later in detail).

The first hydraulic hose 73 and the second hydraulic hose 74 are routed from the banjo bolts 81, 85, respectively in a direction of approaching the head pipe 11. Note that the first hydraulic hose 73, the second hydraulic hose 74, the third hydraulic hose 58, and the fourth hydraulic hose 64 are flexible hoses.

Next, a description is given of how hydraulic hoses are attached.

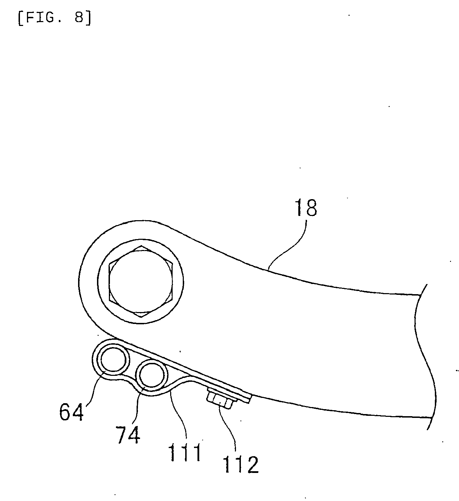

As shown in Fig. 8, the hose clip 111 is bent to surround the second hydraulic hose 74 and the fourth hydraulic hose 64, and end portions thereof are fixed to the bottom bridge 18 by using a bolt 112. Note that the hydraulic hoses may be held by a similar hose clip in a different location thereof as well.

Next, a description is given of how the ABS modulator 53 and the delay valve 54 are attached.

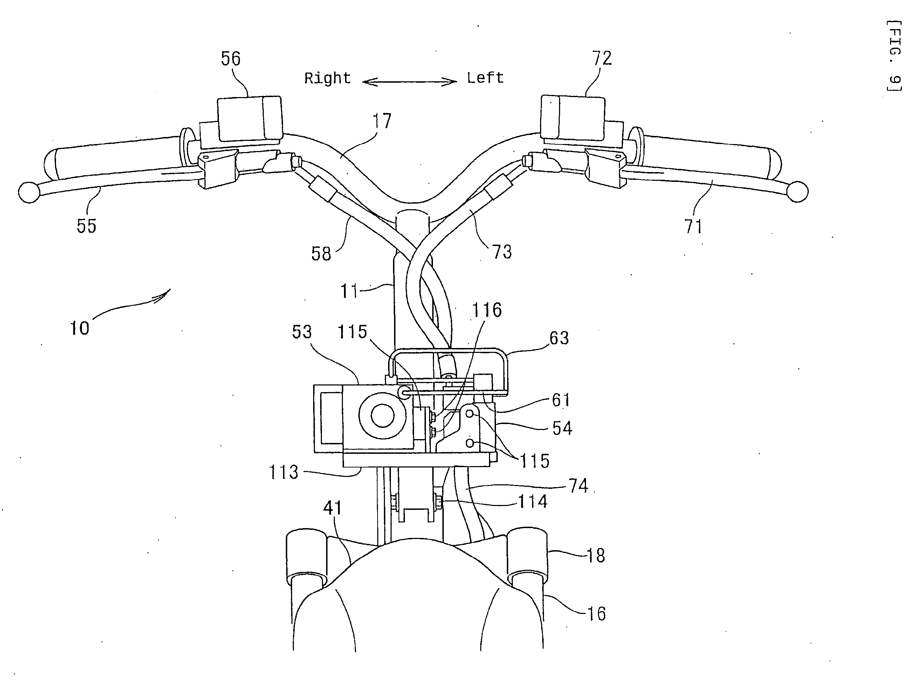

As shown in Fig. 9, a bracket 113 is attached to the head pipe 11 by using a bolt 114 in a way that the bracket 113 is directed in a vehicle-front direction. By using bolts 115, the delay valve 54 is attached to a left-side portion of the bracket 113 in the vehicle-width direction. The ABS modulator 53 is attached to a right-side portion of the bracket 113 in the vehicle-width direction by using a bolt 116 with a bush 115 placed in between. Note that the first connection portion 57 and the second connection portion 62 shown in Fig. 7 are also attached to the bracket 113. Meanwhile, the first hydraulic hose 73 and the second hydraulic hose 74 are fastened to an inner portion of the delay valve 54 in the vehicle-width direction.

Referring back to Fig. 7, this structure includes the ABS modulator 53 and the delay valve 54 which are arranged side by side on the single bracket 113 in the vehicle-width direction, and therefore can have a shorter length in a front-rear direction. Consequently, as shown in Fig. 1, the front cover 32 can be made compact while securing a leg rest space. Thus, this structure is suitable for the scooter-type motorcycle 10 having the step floor 34 between the front cover 32 and the seat 24. Furthermore, this structure is more suitable for a scooter-type motorcycle in which the thickness of the front cover 32 in the front-rear direction of the vehicle is thinner than a dimension of the front cover 32 in the vehicle-width direction.

Next, the length of hydraulic hoses will be described in comparison with that of a comparative example.

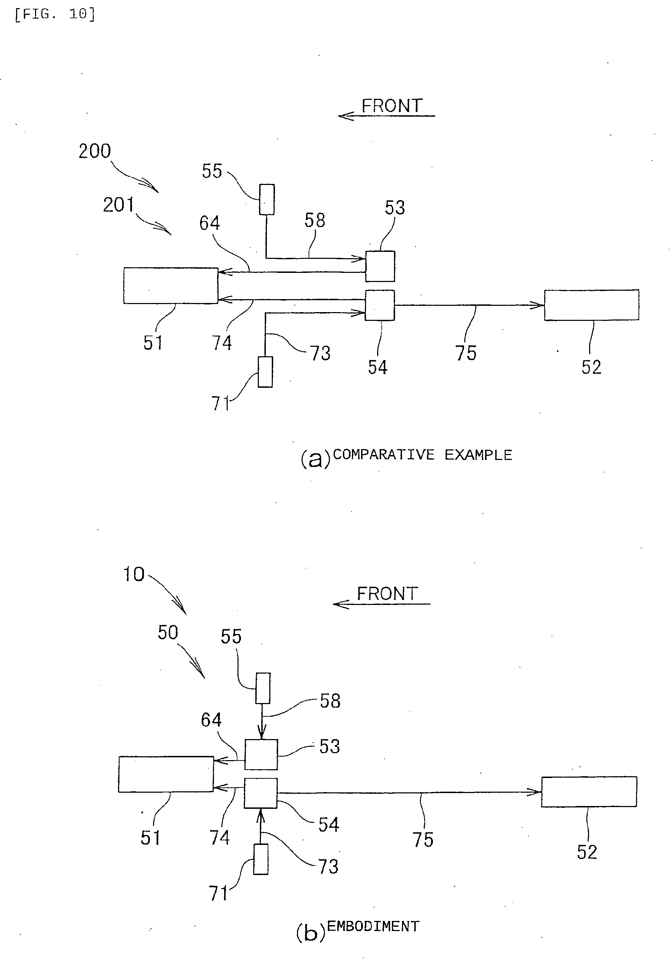

Part (a) of Fig. 10 shows a motorcycle 200 (a vehicle body 200) in the comparative example. In a brake system 201, an ABS modulator 53 and a delay valve 54 are arranged substantially in the center of the vehicle body 200. Hydraulic hoses 58, 73 respectively from a first controller 55 and a second controller 71 are extended from a front portion of the vehicle body 200 to the ABS modulator 53 and the delay valve 54 in the center. Then, hydraulic hoses 64, 74 are extended from the center of the vehicle body 200 to a front-wheel brake 51 in the front portion thereof. The arrangement results in a longer length by which hydraulic hoses 58, 73 and the hydraulic hoses 64, 74 overlap with each other.

In contrast to this, in the embodiment shown in Part (b) of Fig. 10, in the brake system 50, the ABS modulator 53 and the delay valve 54 are arranged in a front portion of the motorcycle 10. With this arrangement, the hydraulic hoses 58, 73 and the hydraulic hoses 64, 74 do not overlap with each other. Consequently, the hydraulic hoses 58, 64, 73, 74 can be routed so that the length thereof can be minimized.

Next, a description is given of how the motorcycle 10 described above works.

According to the structure shown in Fig. 5, the ABS modulator 53 and the delay valve 54 are arranged between the first controller 55 and the second controller 71. The hydraulic pipe 58 (the third hydraulic hose 58) and the hydraulic pipe 73 (the first hydraulic hose 73) can be made shortest, the hydraulic pipe 58 extending from the first controller 55 to the ABS modulator 53 or the delay valve 54, the hydraulic pipe 73 extending from the second controller 71 to the ABS modulator 53 or the delay valve 54. Consequently, the total length of the hydraulic pipes can be shortened. Since the hydraulic pipes 58, 73 in particular around the head pipe 11 are shortened, the front cover (denoted by reference numeral 32 in Fig. 1) collectively surrounding the hydraulic pipes 58, 73, the ABS modulator 53, and the delay valve 54 can be made small.

According to the structure shown in Fig. 5, the delay valve 54 is attached to the head pipe 11 which is not steered. Since the weight of the delay valve 54 is not applied to a steering system 16, the weight of the steering system 16 does not become heavy, so that steering can be performed lightly.

In addition, since the first hydraulic hose 73 and the second hydraulic hose 74 can be located closer to the head pipe 11, the movement of the first hydraulic hose 73 during the steering can be minimized, the first hydraulic hose 73 can be made as shortest as possible, and thus the motorcycle 10 can be made smaller. Further, since the banjo bolts 81, 85 are tightened while directed in the vehicle-width direction, the first hydraulic hose 73 and the second hydraulic hose 74 extending in a direction perpendicular to the axes of the banjo bolts 81, 85 can be easily directed toward the head pipe 11, the delay valve 54 can be arranged without difficulties, and thus the degree of freedom of the arrangement can be enhanced.

According to the structure shown in Fig. 5, the ABS modulator 53 is attached to the head pipe 11 which is not steered. Since the weight of the ABS modulator 53 is not applied to the steering system 16, the weight of the steering system 16 does not become heavy, so that steering can be performed lightly.

In addition, because the third hydraulic hose 58 and the fourth hydraulic hose 64 can be located closer to the head pipe 11, the movement of the third hydraulic hose 58 during the steering can be minimized; the third hydraulic hose 58 can be made as shortest as possible; and the motorcycle 10 can be made smaller. Further, since the delay valve 54 is arranged in front of the third hydraulic hose 58 and the fourth hydraulic hose 64, the first hydraulic hose 73 and the third hydraulic hose 58 which move in conjunction with the steering of the steering system 16 can be arranged close to each other; and the second hydraulic hose 74 and the fourth hydraulic hose 64 can be arranged close to each other. For this reason, the movement space can be minimized by collectively routing the hydraulic hoses, and the front cover 32 can be made smaller.

According to the structure shown in Fig. 5, since the hydraulic pipes 61, 63 which are different bodies are routed while detouring around the outer side of the delay valve 54 in the vehicle-width direction, a space near the center in the vehicle-width direction can be made large; the delay valve 54, the third hydraulic hose 58 and the fourth hydraulic hose 64 can be located close to the head pipe 11; and the front portion of the motorcycle 10 can be made smaller.

According to the structure shown in Fig. 9, the ABS modulator 53, the delay valve 54, the third hydraulic hose 58, and the fourth hydraulic hose 64 sub-assembled with the bracket 113 can be attached to a vehicle body, and man-hours for attaching steps can be reduced. In addition, according to the structure shown in Fig. 5, since the first connection portion 57 and the second connection portion 62 are arranged close to the head pipe 11, the third hydraulic hose 58 and the fourth hydraulic hose 64 can be routed near the head pipe 11; and thus the movement during the operation of the handlebar 17 can be minimized.

According to the structure shown in Fig. 5, since the first hydraulic hose 73 and the second hydraulic hose 74 can be attached at the positions close to the center in the vehicle-width direction, the first hydraulic hose 73 and the second hydraulic hose 74 can be located close to the head pipe 11. Thus, the movement of the first hydraulic hose 73 during the steering can be reduced more, and the ABS modulator 53 and the delay valve 54 can be arranged with a good balance between the left and the right.

Note that although in the embodiment, the present invention is applied to the scooter-type motorcycle, the invention may be applied to a general motorcycle as long as the motorcycle has a first controller and the second controller provided on the handlebar.

### Industrial Applicability

The present invention is suitable for a scooter-type motorcycle including a step floor between a front cover and a seat.

An object of the present invention is to provide a technique for a motorcycle including brake controllers provided on a handlebar, the technique making it possible to make a vehicle body thereof smaller by shortening hydraulic pipes.

The present invention is directed to a third hydraulic hose 58 extending from a first master cylinder 56 toward the center in a vehicle-width direction along a handlebar 17, further routed along a head pipe 11, and then connected to a first connection portion 57. A first hydraulic hose 73 is extended from a second master cylinder 72 toward the center in the vehicle-width direction along the handlebar 17, further is routed along the head pipe 11, and then is connected to a delay valve 54 by using a banjo bolt 81 directed in the vehicle-width direction.

The lengths of hydraulic pipes can be shortened, a front cover can be arranged compactly by being located closer to the head pipe side, and thus the vehicle body can be made smaller.

## Claims

1. A motorcycle (10) including: a head pipe (11) provided in a front portion of a vehicle body frame (14); a steering system (16) pivotally supported by the head pipe (11), and including a front wheel (15) in a lower portion of the steering system (16); a handlebar (17) provided on an upper portion of the steering system (16), and configured to steer the front wheel (15); a front cover (32) provided below the handlebar (17), and covering the head pipe (11); a hydraulic front-wheel brake (51) provided to the steering system (16), and configured to brake the front wheel (15); a hydraulic rear-wheel brake (52) provided to a vehicle body, and configured to brake a rear wheel (21); a first controller (55) configured to generate a hydraulic pressure for operating the front-wheel brake (51); a second controller (71) configured to generate a hydraulic pressure for operating the rear-wheel brake (52); an ABS modulator (53) configured to control breaking force for the front wheel (15) in operating the front-wheel brake (51); wherein the first controller (55) and the second controller (71) are provided on the handlebar (17) and the ABS modulator (53) is arranged inside the front cover (32) and in front of the head pipe (11)
the motorcycle being **characterized in that** the hydraulic pressure generated by the second controller is configured for operating both the rear wheel brake and the front-wheel brake and **in that** the motorcycle further comprises a delay valve (54) configured to divide the hydraulic pressure generated by the manipulation of the second controller (71) between the front-wheel brake (51) and the rear-wheel brake (52), and configured to delay the timing of feeding the hydraulic pressure to the front-wheel brake (51) in comparison with the timing of feeding the hydraulic pressure to the rear-wheel brake (52),
wherein the delay valve (54) is arranged inside the front cover (32) and by the side of the ABS modulator (53).

2. The motorcycle according to claim 1, wherein
the delay valve (54) is fixed to the head pipe (11),
a flexible first hydraulic hose (73) extended from the second controller (71) to the delay valve (54), and a flexible second hydraulic hose (74) extended from the front-wheel brake (51) to the delay valve (54) are fastened to the delay valve (54) by using banjo bolts (81, 85) directed in a vehicle-width direction, and
the first hydraulic hose (73) and the second hydraulic hose (74) are routed from the banjo bolts (81, 85) in a direction of approaching the head pipe (11) in a side view of a vehicle.

3. The motorcycle according to claim 2, wherein
the ABS modulator (53) is attached to the head pipe (11), and
a flexible third hydraulic hose (58) extended from the first controller (55) to the ABS modulator (53), and a flexible fourth hydraulic hose (64) extended from the front-wheel brake (51) to the ABS modulator (53) are attached to the head pipe (11) behind the delay valve (54), and then are connected to the ABS modulator (53) via their respective hydraulic pipes (61, 63) which are different bodies.

4. The motorcycle according to claim 3, wherein the hydraulic pipes (61, 63) which are the different bodies detour from the ABS modulator (53) around the front, outer side, and rear of the delay valve (54), and are connected to the third hydraulic hose (58) and the fourth hydraulic hose (64), respectively.

5. The motorcycle according to any one of claims 3 and 4, wherein the ABS modulator (53), the delay valve (54), the third hydraulic hose (58), and the fourth hydraulic hose (64) are attached to the head pipe (11) by use of a bracket (113) attached to a front portion of the head pipe (11).

6. The motorcycle according to any one of claims 2 to 5, wherein
the delay valve (54) is arranged offset to one side in the vehicle-width direction in a front view of the vehicle,
the ABS modulator (53) is arranged offset to the other side in the vehicle-width direction, and
the first hydraulic hose (73) and the second hydraulic hose (74) are fastened to an inner side of the delay valve (54) in the vehicle-width direction.

## Patentansprüche

1. Kraftrad (10), umfassend:
ein Kopfrohr (11), welches in einem vorderen Abschnitt von einem Fahrzeugkörperrahmen (14) vorgesehen ist; ein Lenkungssystem (16), welches schwenkbar durch das Kopfrohr (11) abgestützt ist und ein Vorderrad (15) an einem unteren Abschnitt von dem Lenkungssystem (16) umfasst; einen Lenker (17), welcher an einem oberen Abschnitt von dem Lenkungssystem (16) vorgesehen ist und dazu konfiguriert ist, das Vorderrad (15) zu lenken; eine vordere Abdeckung (32), welche unterhalb des Lenkers (17) vorgesehen ist und das Kopfrohr (11) abdeckt; eine hydraulische Vorderradbremse (51), welche an dem Lenkungssystem (16) vorgesehen ist und dazu konfiguriert ist, das Vorderrad (15) zu bremsen; eine hydraulische Hinterradbremse (52), welche an einem Fahrzeugkörper vorgesehen ist und dazu konfiguriert ist, ein Hinterrad (21) zu bremsen; eine erste Steuer-/Regeleinrichtung (55), welche dazu konfiguriert ist, einen Hydraulikdruck für eine Betätigung der Vorderradbremse (51) zu erzeugen; eine zweite Steuer-/Regeleinrichtung (71), welche dazu konfiguriert ist, einen Hydraulikdruck für eine Betätigung der Hinterradbremse (52) zu erzeugen; einen ABS-Modulator (53), welcher dazu konfiguriert ist, eine Bremskraft für das Vorderrad (15) bei einer Betätigung der Vorderradbremse (51) zu steuern/regeln; wobei die erste Steuer-/Regeleinrichtung (55) und die zweite Steuer-/Regeleinrichtung (71) an dem Lenker (17) vorgesehen sind, und
der ABS-Modulator (53) an der Innenseite der vorderen Abdeckung (32) und vor dem Kopfrohr (11) angeordnet ist,
wobei das Kraftrad **dadurch gekennzeichnet ist,**
**dass** der Hydraulikdruck, welcher durch die zweite Steuer-/Regeleinrichtung erzeugt wird, dazu konfiguriert ist, sowohl die Hinterradbremse als auch die Vorderradbremse zu betätigen, und dass das Kraftrad ferner ein Verzögerungsventil (54) umfasst, welches dazu konfiguriert ist, den durch die Betätigung von der zweiten Steuer-/Regeleinrichtung (71) erzeugten Hydraulikdruck zwischen der Vorderradbremse (51) und der Hinterradbremse (52) zu verteilen, und dazu konfiguriert ist, die Zeiteinstellung einer Zufuhr des Hydraulikdrucks zu der Vorderradbremse (51) im Vergleich zu der Zeiteinstellung einer Zufuhr des Hydraulikdrucks zu der Hinterradbremse (52) zu verzögern, wobei das Verzögerungsventil (54) an der Innenseite der vorderen Abdeckung (32) und an der Seite von dem ABS-Modulator (53) angeordnet ist.

2. Kraftrad nach Anspruch 1, wobei
das Verzögerungsventil (54) an dem Kopfrohr (11) befestigt ist,
ein flexibler erster Hydraulikschlauch (73), welcher sich von der zweiten Steuer-/Regeleinrichtung (71) zu dem Verzögerungsventil (54) erstreckt, und ein flexibler zweiter Hydraulikschlauch (74), welcher sich von der Vorderradbremse (51) zu dem Verzögerungsventil (54) erstreckt, an dem Verzögerungsventil (54) unter Verwendung in einer Fahrzeugbreitenrichtung gerichteter Hohlschrauben (81, 85) befestigt sind, und
der erste Hydraulikschlauch (73) und der zweite Hydraulikschlauch (74) von den Hohlschrauben (81, 85) in einer Richtung geleitet sind, in welcher sie sich in einer Seitenansicht von einem Fahrzeug dem Kopfrohr (11) annähern.

3. Kraftrad nach Anspruch 2, wobei
der ABS-Modulator (53) an dem Kopfrohr (11) angebracht ist, und
ein flexibler dritter Hydraulikschlauch (58), welcher sich von der ersten Steuer-/Regeleinrichtung (55) zu dem ABS-Modulator (53) erstreckt, und ein flexibler vierter Hydraulikschlauch (64), welcher sich von der Vorderradbremse (51) zu dem ABS-Modulator (53) erstreckt, an dem Kopfrohr (11) hinter dem Verzögerungsventil (54) angebracht sind, und dann mit dem ABS-Modulator (53) vermittels ihrer jeweiligen Hydraulikleitungen (61, 63), welche verschiedene Körper sind, verbunden sind.

4. Kraftrad nach Anspruch 3, wobei die Hydraulikleitungen (61, 63), welche verschiedene Körper sind, von dem ABS-Modulator (53) um die Vorderseite, äußere Seite und Rückseite von dem Verzögerungsventil (54) einen Umweg machen, und jeweils mit dem dritten Hydraulikschlauch (58) und dem vierten Hydraulikschlauch (64) verbunden sind.

5. Kraftrad nach einem der Ansprüche 3 und 4, wobei der ABS-Modulator (53), das Verzögerungsventil (54), der dritte Hydraulikschlauch (58), und der vierter Hydraulikschlauch (64) an dem Kopfrohr (11) unter Verwendung von einer Halterung (113) angebracht sind, welche an einem vorderen Abschnitt von dem Kopfrohr (11) angebracht ist.

6. Kraftrad nach einem der Ansprüche 2 bis 5, wobei
das Verzögerungsventil (54) in einer Vorderansicht von dem Fahrzeug in der Fahrzeugbreitenrichtung zu einer Seite versetzt angeordnet ist, der ABS-Modulator (53) in der Fahrzeugbreitenrichtung zu der anderen Seite versetzt angeordnet ist, und
der erste Hydraulikschlauch (73) und der zweite Hydraulikschlauch (74) in der Fahrzeugbreitenrichtung an einer Innenseite von dem Verzögerungsventil (54) befestigt sind.

## Revendications

1. Motocyclette (10) comprenant: un maître tuyau (11) prévu dans une partie avant d'un cadre de caisse de véhicule (14); un système de direction (16) supporté de manière permettant le pivotement par le maître tuyau (11) et incluant une roue avant (15) dans une partie inférieure du système de direction (16); un guidon (17) prévu sur une partie supérieure du système de direction (16) et configuré pour diriger la roue avant (15); un capot avant (32) prévu en dessous du guidon (17) et couvrant le maître tuyau (11); un frein hydraulique de roue avant (51) prévu sur le système de direction (16) et configuré pour freiner la roue avant (15); un frein hydraulique de roue arrière (52) prévu sur une caisse de véhicule et configuré pour freiner une roue arrière (21); un premier contrôleur (55) configuré pour générer une pression hydraulique pour actionner le frein de la roue avant (51); un deuxième contrôleur (71) configuré pour générer une pression hydraulique pour actionner le frein de la roue arrière (52); un modulateur ABS (53) configuré pour contrôler la force de freinage pour la roue avant (15) lors de l'actionnement du frein de la roue avant (51);
dans laquelle le premier contrôleur (55) et le deuxième contrôleur (71) sont prévus sur le guidon (17) et le modulateur ABS (53) est disposé à l'intérieur du capot avant (32) et à l'avant du maître tuyau (11),
la motocyclette étant **caractérisée en ce que** la pression hydrauliques générée par le deuxième contrôleur est configurée pour actionner à la fois le frein de la roue arrière et le frein de la roue avant et **en ce que** la motocyclette comprend en outre une valve de temporisation (54) configurée pour diviser la pression hydraulique générée par la manipulation du deuxième contrôleur (71) entre le frein de la roue avant (51) et le frein de la roue arrière (52), et configuré pour retarder le moment de l'alimentation de la pression hydraulique au frein de la roue avant (51) en comparaison avec le moment de l'alimentation de la pression hydraulique au frein de la roue arrière (52), dans laquelle la valve de temporisation (54) est disposée à l'intérieur du capot avant (32) et sur le côté du modulateur ABS (53).

2. Motocyclette suivant la revendication 1, dans laquelle la valve de temporisation (54) est fixée au maître tuyau (11),
un premier flexible hydraulique (73) s'étendant du deuxième contrôleur (71) à la valve de temporisation (54) et un deuxième flexible hydraulique (74) s'étendant du frein de la roue avant (51) à la valve de temporisation (54) sont fixés à la valve de temporisation (54) à l'aide de boulons banjos (81, 85) dirigés dans une direction de la largeur du véhicule, et
le premier flexible hydraulique (73) et le deuxième flexible hydraulique (74) sont amenés depuis les boulons banjos (81, 85) dans une direction d'approche du maître tuyau (11) dans une vue latérale d'un véhicule.

3. Motocyclette suivant la revendication 2, dans laquelle
le modulateur ABS (53) est attaché au maître tuyau (11), et un troisième flexible hydraulique (58) s'étendant du premier contrôleur (55) au modulateur ABS (53) et un quatrième flexible hydraulique (64) s'étendant du frein de la roue avant (51) au modulateur ABS (53) sont attachés au maître tuyau (11) derrière la valve de temporisation (54), et sont ensuite connectés au modulateur ABS (53) via leurs tuyauteries hydrauliques respectives (61, 63) qui sont des corps différents.

4. Motocyclette suivant la revendication 3, dans laquelle les tuyauteries hydrauliques (61, 63) qui sont des corps différents contournent le modulateur ABS (53) par le côté extérieur avant et l'arrière de la valve de temporisation (54) et sont connectées au troisième flexible hydraulique (58) et au quatrième flexible hydraulique (64), respectivement.

5. Motocyclette suivant l'une quelconque des revendications 3 et 4, dans laquelle le modulateur ABS (53), la valve de temporisation (54), le troisième flexible hydraulique (58) et le quatrième flexible hydraulique (64) sont attachés au maître tuyau (11) à l'aide d'une console (113) attachée à une partie avant du maître tuyau (11).

6. Motocyclette suivant l'une quelconque des revendications 2 à 5, dans laquelle
la valve de temporisation (54) est disposée décalée d'un côté dans le sens de la largeur du véhicule dans une vue de face du véhicule,
le modulateur ABS (53) est disposé décalé par rapport à l'autre côté dans le sens de la largeur du véhicule, et
le premier flexible hydraulique (73) et le deuxième flexible hydraulique (74) sont fixés à un côté intérieur de la valve de temporisation (54) dans le sens de la largeur du véhicule.
